# EUROPÄISCHE PATENTSCHRIFT

(11) **EP 3 085 991 B1**
(45) Veröffentlichungstag und Bekanntmachung des Hinweises auf die Patenterteilung: **11.12.2019**
(21) Anmeldenummer: 16166181.4
(22) Anmeldetag: 20.04.2016
(51) Int. Cl.: F16H 7/02, B65G 33/34, F23B 40/00, F23K 3/00

(54) **PELLETOFEN**
PELLET OVEN
POELE A PELLETS

(30) Priorität: 22.04.2015 DE 202015101992 U
(43) Veröffentlichungstag der Anmeldung: 26.10.2016
(73) Patentinhaber: Johnson Electric Germany GmbH & Co. KG, 01257 Dresden (DE)
(72) Erfinder: Fraulob, Sebastian, Dipl.-Ing., 01187 Dresden (DE)
(74) Vertreter: Sperling, Thomas

(56) Entgegenhaltungen:
- EP-A1- 1 327 825
- EP-A2- 2 562 478
- CN-U- 203 036 661
- US-A- 2 541 742
- US-A- 2 927 682
- US-A- 3 543 948
- US-A1- 2014 148 289

## Beschreibung

Die Erfindung betrifft einen Pelletofen. Dieser umfasst eine Pelletfördereinrichtung, die sich sich aufgrund von geräuscharmen bis geräuschlosen Getrieben für die Verwendung im Wohnbereich eignet. Pelletöfen, die der Beheizung von Wohnräumen dienen, sind aus dem Stand der Technik bekannt. Derartige Pelletöfen weisen eine automatische Einrichtung zur Förderung der Pellets in die Brennkammer auf.

Die EP 1 327 825 A1 beschreibt einen gattungsgemäßen Pelletofen, bestehend aus einer Stütz- und Haltevorrichtung, einer Pelletbrennkammer, einem zu einem Schornstein führenden Abzugskreislauf zur Abfuhr von Rauchgasen sowie mindestens einem vom oberen Teil der Brennkammer nach unten führenden seitlichen Abschnitt, einem Umgebungslufteinlass-Kreislauf mit mindestens einem Lufteinlass und mindestens einem Abschnitt in Wärmeaustauschverbindung mit dem vom Abzugskreislauf nach unten führenden seitlichen Abschnitt zum Erwärmen der eingeführten Umgebungsluft, und einem Heißluftzufuhrkreislauf. Dabei führt der Umgebungslufteinlass-Kreislauf nach unten und der Lufteinlass ist im oberen Teil der Stütz- und Haltevorrichtung vorgesehen. Des Weiteren befindet sich der Heißluftzufuhrkreislauf im unteren Teil der Stütz- und Haltevorrichtung und weist mindestens einen Schacht auf, dessen Auslass auf Fußbodenebene liegt. Der Ofen ist mit einem automatischen oder halbautomatischen Mittel zur Beschickung der Brennkammer versehen, wobei ein solches Mittel einen Einfülltrichter aufweist, der zum Beispiel zwischen der Hinterwand und der Innenwand des Ofens vorgesehen ist und durch eine obere Klappe oder eine seitliche Tür befüllbar ist. Am Boden des Trichters ist eine von einem Elektromotor über eine Drehzahlverringerungseinheit angetriebene Förderschnecke eingebaut, die so gestaltet ist, dass sie Pellets auf eine rohrförmige Rutsche fördert, welche die Pellets unmittelbar dem Herd beziehungsweise der Feuerstelle zuführt.

Die US 5018455 A beschreibt eine Kraftstoffversorgungsanlage zum Fördern von teilchenförmigem Brennstoff wie Holzpellets, zerkleinerter Kohle, Holzspäne und dergleichen aus einem Vorratstrichter in eine Feuerkammer. Das System weist einen Vorratstrichter mit einer Auslassöffnung, eine Kraftstoffsammelplatte unter der Mündung des Trichters, einen Schubblock an der Kraftstoffsammelplatte sowie eine sich unter der Platte befindliche Kraftstoffförderleitung auf. Die Kraftstoffförderleitung enthält ein Kraftstoffabgabe-Ende, welches sich in einem Feuerraum befindet, und ein Kraftstoffzufuhr-Ende unterhalb der Kraftstoffsammelplatte, wobei Kraftstoffzuführungsmittel zur Bewegung von Kraftstoff durch die Kraftstoffförderleitung vom Kraftstoffzufuhr-Ende zum Kraftstoffabgabe-Ende vorgesehen sind.

Allgemein umfasst eine in derartigen Pelletöfen jeweils angewandte automatische Fördereinrichtung
- einen Elektromotor, der meist als
   ∘ Spaltpolmotor oder als
   ∘ Synchronmotor vorliegen kann,
- ein Getriebe, das meist als
   ∘ Stirnradgetriebe, bestehend aus Metall und/oder Kunststoff, ausgebildet ist, sowie
- einen Pelletförderer, der
   ∘ eine Förderschnecke, wie zum Beispiel in der EP 1 327 825 A1 und US 5018455 A beschrieben, oder
   ∘ ein Sternförderer gemäß CN 203036661 sein kann.

Andere Pelletfördereinrichtungen, wie auf der Basis von Schwerkraft, die aus der US 2007186920 A1 und der GB 2469938 A bekannt sind, oder ein rüttelndes Förderband, wie in der US 5151000 A beschrieben, spielen eine untergeordnete Rolle für Pelletöfen im Wohnbereich. Deshalb ist der geräuscharme Betrieb dort von untergeordneter Bedeutung.

Bei den bisher bekannten, gegebenenfalls auch für den Nachtbetrieb vorgesehen Anlagen für den Wohnbereich sind die Geräuschpegel bei der Pelletförderung zu hoch, obwohl diese im Vergleich zu den im Außenbereich eingesetzten Fördereinrichtungen bereits sehr leise sind. Geräusche entstehen dabei weniger durch den Motor, da dieser meist bürstenlos ausgebildet ist. Gravierender wirken sich der vom Getriebe direkt abgestrahlte Luftschall und die Vibrationen aus, welche in das Ofengehäuse übertragen werden. Der größte Anteil dieser Geräusche und Vibrationen resultiert aus den Getriebestufen mit hoher Drehzahl, insbesondere der ersten und zweiten Getriebestufe.

Aus der US 2 927 682 A ist eine Antriebsvorrichtung für einen Trogförderer bekannt, welche einen Antriebsmotor umfasst, der mit einer Drehzahlverringerungseinheit durch einen flexiblen Antrieb, wie zum Beispiel durch eine Riemenscheibenanordnung, in einer Wirkverbindung steht. Die Drehzahlverringerungseinheit ist auf einem Trog befestigt, der eine Förderschnecke enthält. Eine Hochgeschwindigkeits-Eingangswelle und eine Niederdrehzahl-Abtriebswelle sind innen an einem Gehäuse und insbesondere an Wandabschnitten des Gehäuses angebracht. Die Eingangswelle steht durch Getriebe mit der Abtriebswelle in einer Wirkverbindung, wobei eine Zwischenwelle vorgesehen ist, die im Inneren des Gehäuses angebracht ist. Die zweistufige Getriebeanordnung enthält ein Ritzelzahnrad, das von der Eingangswelle getragen wird, welche ein größeres Zahnrad umgibt, das von der Zwischenwelle getragen wird. Ein kleineres Zahnrad, das von der Zwischenwelle getragen wird, greift in ein relativ großes Zahnrad ein, das mit der Abtriebswelle verkeilt ist.

Die US 3 543 948 A beschreibt eine Vorrichtung, die geeignet ist, Material von einem Behälter durch eine Öffnung in einer Seitenwand des Behälters zu entfernen. Die Vorrichtung weist eine drehbare Förderschnecke auf, die mit einer Antriebseinrichtung in einer Wirkverbindung steht und mittels dieser Antriebseinrichtung angetrieben wird. Diese Antriebseinrichtung weist einen Motor und mehrere Riemengetriebe auf.

In der US 2014/148289 A1 ist eine Drehzahlreduzierungsvorrichtung zum Zusammenwirken einer mechanischen Energiequelle, zum Beispiel eines Elektromotors, mit einer mechanischen Leistungslast beschrieben. Die Vorrichtung umfasst ein Gehäuse, eine Eingangswelle und eine zweite Welle. Die Vorrichtung umfasst auch eine erste Rolle, eine zweite Rolle und einen Riemen. Die Eingangswelle ist innerhalb des Gehäuses drehbar gelagert und zumindest teilweise im Gehäuse angeordnet. Die zweite Welle ist im Gehäuse drehbar gelagert und zumindest teilweise innerhalb des Gehäuses angeordnet. Die erste Riemenscheibe ist mit der Eingangswelle verbunden und befindet sich innerhalb des Gehäuses. Die zweite Riemenscheibe ist betriebsmäßig mit der zweiten Welle verbunden und befindet sich innerhalb des Gehäuses, wobei der Riemen die erste Riemenscheibe mit der zweiten Riemenscheibe verbindet und sich innerhalb des Gehäuses befindet.

Die Aufgabe der Erfindung besteht in der Bereitstellung einer Pelletfördereinrichtung mit einem möglichst geräuschlosen Antrieb und damit der Reduzierung der Geräuschpegel bei der Pelletförderung.

Die Aufgabe wird durch einen Pelletofen mit den Merkmalen des Patentanspruchs 1 gelöst. Weiterbildungen sind in den abhängigen Patentansprüchen angegeben. Eine solcher Pelletofen umfasst zumindest eine Brennkammer, einen Pelletvorratsbehälter und eine Pelletfördereinrichtung mit dem Pelletförderer für die Förderung von Pellets aus dem Pelletvorratsbehälter in die Brennkammer. Die Pelletfördereinrichtung ist für Pelletöfen im Wohnbereich geeignet und umfasst
- einen Pelletförderer und
- einen Antrieb für den Pelletförderer mit einem Antriebsmotor und einem Getriebe, wobei das Getriebe eine oder mehrere Getriebestufen aufweist.

Erfindungsgemäß ist im Getriebe mindestens eine Riemengetriebestufe integriert. Durch die Riemengetriebestufe wird ein die Schwingung dämpfendes sowie selbst geräuscharmes Getriebeelement implementiert, wobei gleichzeitig eine große Übersetzung möglich ist. Durch den Einsatz von Riemengetriebestufen, die beispielsweise Zahnradgetriebestufen ersetzen, wird die harte Kopplung zwischen dem Antriebsmotor und dem Getriebe ganz oder zumindest teilweise aufgehoben. Auf diese Weise werden die vom Motor verursachten Schwingungen gedämpft und die Schwingungsanregung durch die Getriebestufe selbst verringert, womit ein geräuscharmer bis geräuschloser Betrieb der Pelletfördereinrichtung möglich ist. Zusätzlich sind dämpfende Elemente an der Befestigung des Antriebsmotors an einem Getriebegehäuse, das das Getriebe wenigstens teilweise umgibt, angeordnet. Das heißt, die dämpfenden Elemente sind zwischen dem Antriebsmotor und dem Getriebegehäuse platziert. Gemäß der Erfindung ist eine erste Getriebestufe, die an der Antriebsseite direkt an den Antriebsmotor anschließt, und/oder eine an die erste Getriebestufe anschließende zweite Getriebestufe jeweils als Riemengetriebestufe ausgeführt.

Vorzugsweise ist der Pelletförderer in Form einer Förderschnecke oder eines Fördersterns ausgebildet. Gemäß einer bevorzugten Ausführungsform ist eine Antriebsscheibe der mindestens einen Riemengetriebestufe mit einer vom Antriebsmotor ausgehenden Antriebswelle drehfest verbunden. Besonders vorteilhaft ist es, wenn die Antriebsscheibe wesentlich kleiner ist als die Abtriebsscheibe des Riementriebs und somit eine große Übersetzung gewährleistet wird.

Als Riemengetriebestufe/Riemengetriebestufen können zum Beispiel mindestens eine Zahnriemengetriebestufe und/oder mindestens eine Flachriemengetriebestufe und/oder mindestens eine Keilriemengetriebestufe integriert sein. Besonders bevorzugt ist die Ausführung der Riemengetriebestufe als Zahnriemengetriebestufe. Das heißt, neben Zahnriemengetrieben eignen sich auch andere Riemengetriebe, wie zum Beispiel die genannten Flachriemen- und Keilriemengetriebe. Flachriemen- und Keilriemengetriebe haben ähnliches Geräusch- und Dämpfungsverhalten wie Zahnriemengetriebe, allerdings basiert die Drehmomentübertragung im Unterschied zum Zahnriemengetriebe, der auf Formschluss basiert, auf Kraftschluss.

Besonders bevorzugt ist das Zahnriemengetriebe, da dieses zum einen Vorteile im Vergleich zu anderen Riemengetrieben hinsichtlich der Konstanz der Fördermengen und beim Auftreten von Drehmomentspitzen, zum Beispiel in Folge des Abschärens von Pellets im Pelletförderer, bietet. Zum anderen reicht im Vergleich zu anderen Riemengetrieben eine deutlich niedrigere Riemenvorspannung aus, wodurch eine weniger massive Lagerung und Gehäusestruktur notwendig ist. Eine geringe Lagerbelastung führt zu geringen Kosten und hoher Lebensdauer des Antriebs.

Zudem ist mit Zahnriemenstufen eine große Übersetzung möglich, was wiederum eine sehr geringe Drehzahl an den nachfolgenden Zahnradstufen bedingt, wodurch Geräuschemission vermieden wird. Ein Zahnriemengetriebe dämpft auch besser die Stöße, die durch Pelletförderung, insbesondere durch gelegentliches Abschären von Pellets bei der Verwendung von Sternförderern, auftreten.

Gemäß einer besonders vorteilhaften Ausführungsform ist in der mindestens einen Riemengetriebestufe eine Abtriebsscheibe des Riementriebs auf einer Getriebeausgangswelle drehbar gelagert, das heißt, die Abtriebsscheibe ist zu dieser Getriebeausgangswelle relativ drehbeweglich. Dies ermöglicht eine platzsparende Bauweise, insbesondere bei Anwendung einer Zahnriemengetriebestufe, in der die größere Zahnscheibe auf der Getriebeausgangswelle relativ drehbar ist. Somit können die Abtriebsscheibe und weitere Abtriebsscheiben und/oder Zahnräder mehrerer Getriebestufen, die koaxial zur Getriebeausgangswelle positioniert sind, übereinander angeordnet werden. Somit kann eine Stapelbauweise beziehungsweise Steckbauweise des Getriebes realisiert werden. Vorzugsweise sind dabei direkt übereinanderliegende Abtriebsscheiben und/oder Zahnräder einteilig oder zusammengesetzt als Doppelräder ausgebildet, die zusammen um eine Achse/Welle beweglich sind.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen. Es zeigen:
- **Fig. 1:**: einen Antrieb der Pelletfördereinrichtung mit Antriebsmotor und Getriebe in einer schematischen perspektivischen Ansicht,
- **Fig.2:**: den Antrieb mit Antriebsmotor und Getriebe in einer Schnittdarstellung,
- **Fig. 3:**: den Antrieb mit Antriebsmotor und Getriebe in einer Vorderansicht und
- **Fig.4:**: den Antrieb mit Antriebsmotor und Getriebe in einer Schnittdarstellung mit einer Schnittebene parallel zur Vorderseite.

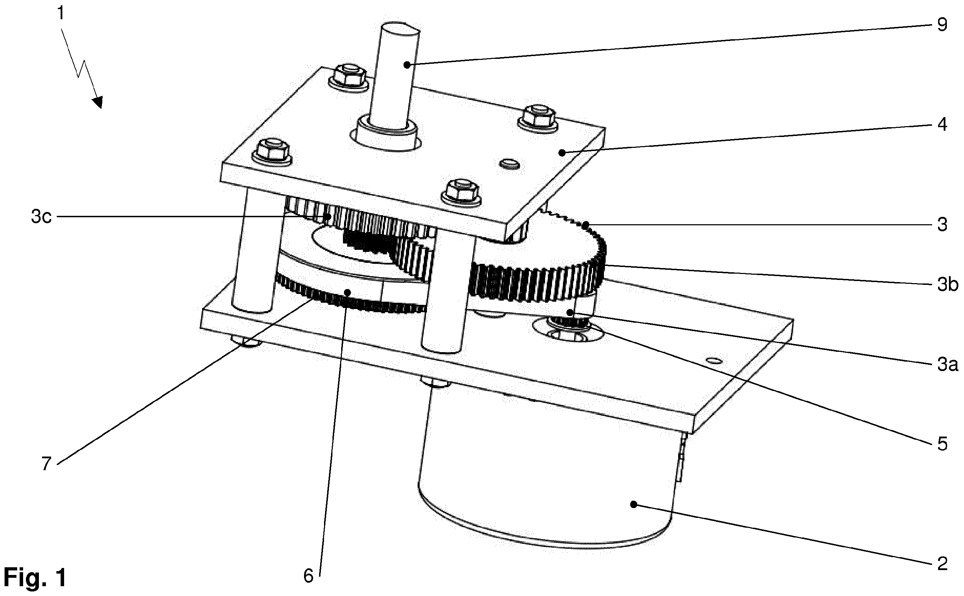

Die **Fig. 1** zeigt eine perspektivische Ansicht eines Antriebs 1 einer Pelletfördereinrichtung für Pelletöfen im Wohnbereich. Dieser Antrieb 1 umfasst einen Antriebsmotor 2 und ein Getriebe 3. Eine Gehäuse 4 des Getriebes 3, im Folgenden das Getriebegehäuse 4 genannt, ist in dieser schematischen Darstellung lediglich in Teilen und ohne Gehäusewände dargestellt. Das Getriebe 3 ist wenigstens teilweise vom Getriebegehäuse umgeben. Zur Pelletfördereinrichtung gehört darüber hinaus ein nicht dargestellter Pelletförderer. Dieser Pelletförderer kann zum Beispiel eine Pellet-Förderschnecke oder ein Pellet-Förderstern in einem nicht dargestellten Pelletofen sein und ist mit dem Antriebsmotor 2 über das Getriebe 3 antreibbar. Der Pelletförderer ist geeignet, Pellets aus einem vorzugsweise abgedichteten Pelletvorratsbehälter in einen Feuerraum des Pelletofens zu fördern.

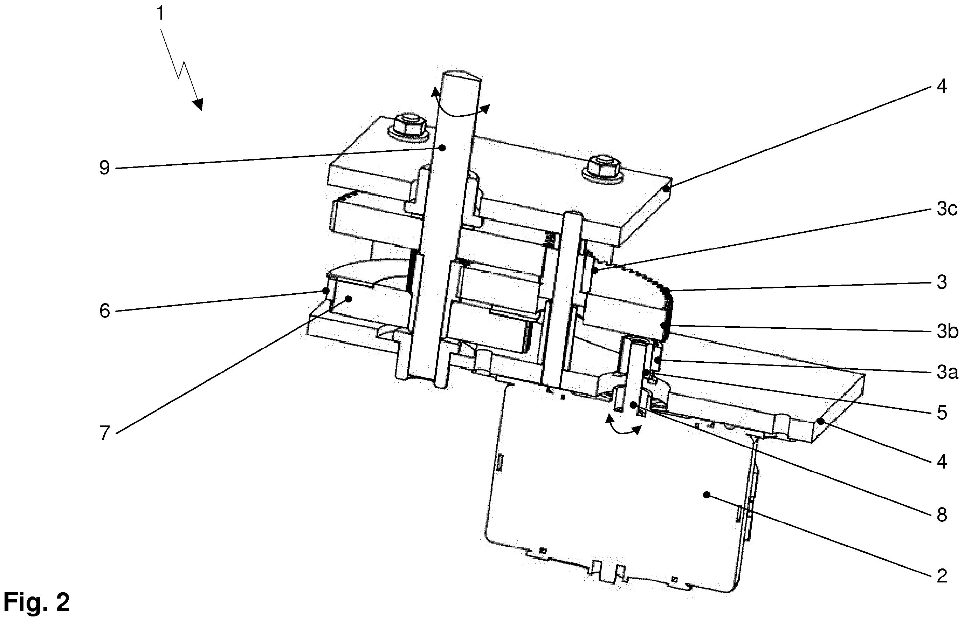

Das Getriebe ist, wie die perspektivische Ansicht in **Fig. 1** sowie die schematische Schnittdarstellung in **Fig. 2** zeigen, mehrstufig mit parallel in Stapelbauweise beziehungsweise Steckbauweise übereinander angeordneten Getriebestufen 3a, 3b und 3c ausgebildet. Dabei schließt eine erste Getriebestufe 3a an der Antriebsseite des Getriebes 3 direkt an den Antriebsmotor 2 an. Dabei ist die erste Getriebestufe 3a als Riemengetriebestufe 3a, gemäß **Fig. 1** und **Fig. 2** als Zahnriemengetriebestufe 3a mit einer kleinen Zahnscheibe 5, einem Zahnriemen 6 und einer großen Zahnscheibe 7, ausgebildet. Vorteilhaft ist eine Riemenscheibe 5 der Riemengetriebestufe 3a, im gezeigten Ausführungsbeispiel die kleine Zahnscheibe 5, mit der vom Antriebsmotor 2 direkt ausgehenden Antriebswelle 8 drehfest verbunden.

Das Abtriebsrad 7 beziehungsweise die Abtriebsscheibe 7 der Riemengetriebestufe 3a ist auf einer Getriebeausgangswelle 9, die auch mit Abtriebswelle 9 bezeichnet wird, drehbar angeordnet. Das heißt, die große Riemenscheibe 7 als Abtriebsscheibe 7 des Riementriebs 3a ist koaxial zur Abtriebswelle 9 angeordnet, mit dieser aber nicht drehfest verbunden, sondern zur Abtriebswelle 9 relativ drehbar.

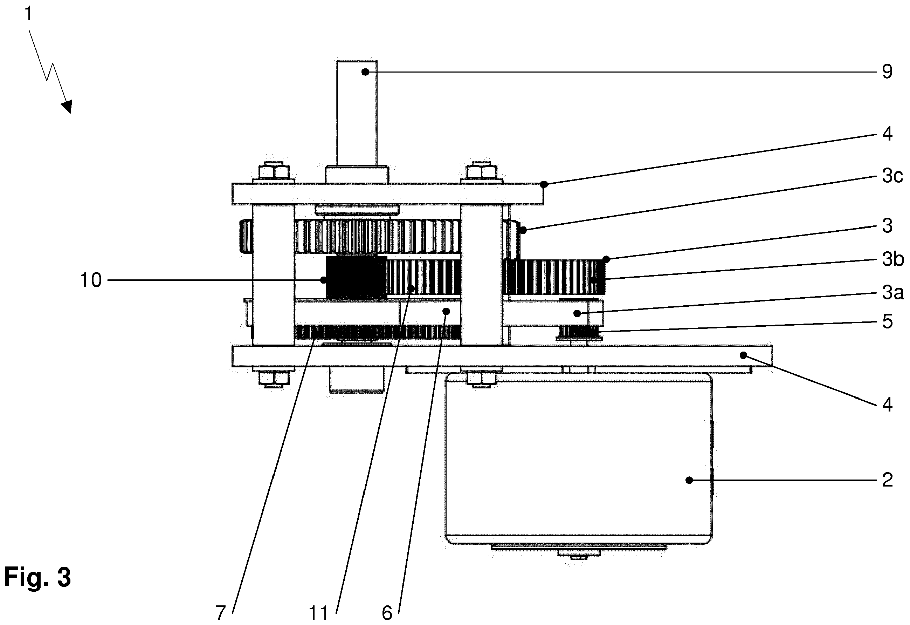

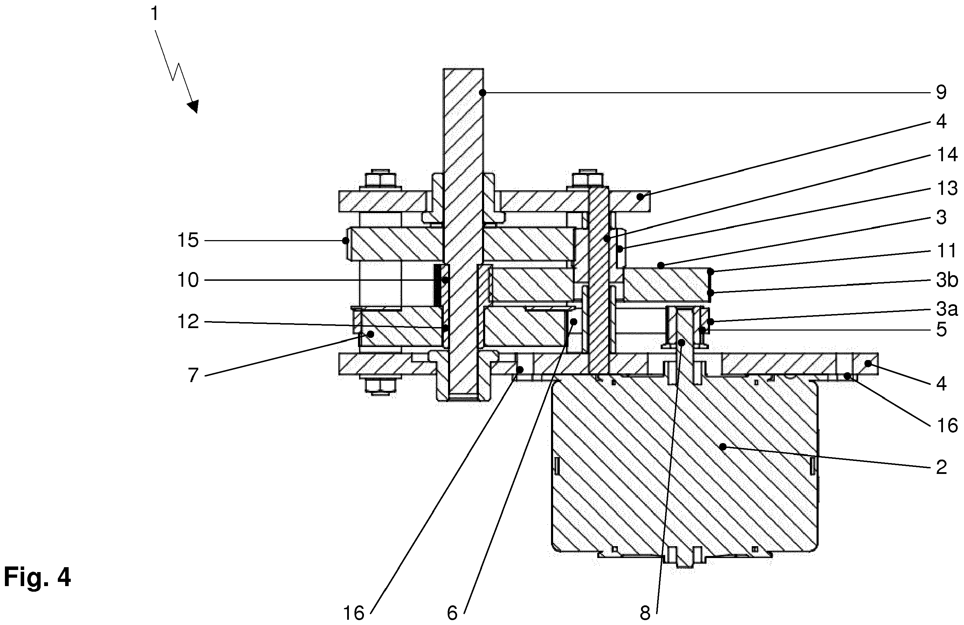

Die **Fig. 3** zeigt den Antrieb 1 der Pelletfördereinrichtung mit Antriebsmotor 2 und Getriebe 3 in einer Vorderansicht. Der ersten Getriebestufe 3a mit kleiner Riemenscheibe 5, Riemen 6 und großer Riemenscheibe 7, schließt sich in Stapelbauweise die zweite Getriebestufe 3b mit einem ersten, kleinen Zahnrad 10 und einem zweiten, großen Zahnrad 11 an. Das erste Zahnrad 10 ist über der großen Riemenscheibe 7 ebenfalls koaxial zur Abtriebswelle 9 und auf dieser zusammen mit der Riemenscheibe 7 drehbar gelagert. Wie die Schnittdarstellung parallel zur Vorderseite in **Fig. 4** zeigt, ist die Abtriebsscheibe 7 des Riemengetriebes 3a und das Zahnrad 10 als Doppelrad ausgebildet. Dazu ist das Zahnrad 10 einteilig mit einem Verbindungsabschnitt 12 ausgebildet, welcher im zylindrischen Innenteil der Abtriebsscheibe 7 koaxial zur Abtriebsscheibe 7 angeordnet und an dieser befestigt ist. Dabei ist gemäß dem gezeigten Ausführungsbeispiel das Doppelrad aus Riemenscheibe 7 und Zahnrad 10 zusammengesetzt ausgebildet. Eins solches Doppelrad kann auch einteilig ausgebildet sein und ist beispielsweise durch Spritzguss und Sintern erhältlich. Das kleinere, erste Zahnrad 10 ist, wie die **Figuren 1** bis **4** zeigen, dafür vorgesehen, in der zweiten Getriebestufe 3b ein zweites, größeres Zahnrad 11 anzutreiben. Entsprechend der bereits erwähnten Stapelbauweise ist auch dieses zweite Zahnrad 11 der zweiten Getriebestufe 3b Teil eines Doppelzahnrades. Dieses Doppelzahnrad bildet das große Zahnrad 11 der zweiten Getriebestufe 3b zusammen mit einem darüber angeordneten ersten Zahnrad 13 der dritten Getriebestufe 3c, wobei die Zahnräder 11, 13 als Doppelzahnrad koaxial zu einer Welle 14 angeordnet und auf dieser drehbar gelagert sind. Auch das Doppelzahnrad kann sowohl einteilig als auch zusammengesetzt ausgebildet sein und ist zum Beispiel durch Spritzguss oder durch Sintern erhältlich.

Das erste Zahnrad 13 der dritten Getriebestufe 3c greift schließlich in ein Abtriebszahnrad 15, welches drehfest mit der Abtriebswelle 9 verbunden ist, die die Getriebeausgangswelle 9 darstellt, welche den Pelletförderer antreibt.

Zusätzlich können in den **Figuren 1** bis **4** nicht gezeigte, Schwingung dämpfende Elemente an der Befestigung 16 des Antriebsmotors 2 am Getriebegehäuse 4, das heißt zwischen dem Antriebsmotor 2 und dem Getriebegehäuse 4, angeordnet sein.

### Bezugszeichenliste

- 1: Antrieb
- 2: Antriebsmotor, Elektromotor
- 3: Getriebe
- 3a: erste Getriebestufe, Riemengetriebestufe, Zahnriemengetriebestufe, Riementrieb, Riemengetriebe
- 3b: zweite Getriebestufe
- 3c: dritte Getriebestufe
- 4: Gehäuse, Getriebegehäuse
- 5: kleine Zahnscheibe, mit der vom Antriebsmotor direkt ausgehenden Antriebswelle drehfest verbundene Riemenscheibe des Riemengetriebes, Antriebsscheibe
- 6: Zahnriemen, Riemen
- 7: große Zahnriemenscheibe, Abtriebsscheibe des Riementriebs 3a), Riemenscheibe, Abtriebsrad, Zahnscheibe
- 8: Antriebswelle
- 9: Getriebeausgangswelle, Abtriebswelle
- 10: erstes Zahnrad, kleines Zahnrad der zweiten Getriebestufe 3b
- 11: zweites Zahnrad, großes Zahnrad der zweiten Getriebestufe 3b
- 12: Verbindungsabschnitt
- 13: Zahnrad, erstes Zahnrad der dritten Getriebestufe 3c,
- 14: Welle
- 15: Abtriebszahnrad
- 16: Befestigung (des Antriebsmotors 2 am Getriebegehäuse 4)

## Patentansprüche

1. Pelletofen, zumindest umfassend
◆ eine Brennkammer,
◆ einen Pelletvorratsbehälter und
◆ eine Pelletfördereinrichtung für Pelletöfen im Wohnbereich, welche einen Pelletförderer für die Förderung von Pellets aus dem Pelletvorratsbehälter in die Brennkammer sowie einen Antrieb (1) für den Pelletförderer mit einem Antriebsmotor (2) und einem Getriebe (3) umfasst, wobei das Getriebe eine oder mehrere Getriebestufen aufweist,
**dadurch gekennzeichnet, dass** das Getriebe (3) ein Getriebegehäuse (4) und zusätzlich Schwingung dämpfende Elemente aufweist, wobei das Getriebe (3) wenigstens teilweise von dem Getriebegehäuse (4) umgeben ist, und wobei die zusätzlich Schwingung dämpfende Elemente an einer Befestigung (16) des Antriebsmotors (2) am Getriebegehäuse (4), das heißt zwischen dem Antriebsmotor (2) und dem Getriebegehäuse (4), angeordnet sind, und **dass** im Getriebe (3) mindestens eine Riemengetriebestufe integriert ist, die eine erste Getriebestufe (3a), welche an der Antriebsseite direkt an den Antriebsmotor (2) anschließt, und/oder eine an die erste Getriebestufe (3a) anschließende zweite Getriebestufe (3b) ist.

2. Pelletofen nach Anspruch 1, **dadurch gekennzeichnet, dass** als Riemengetriebestufe (3a)/Riemengetriebestufen mindestens eine Zahnriemengetriebestufe (3a) und/oder mindestens eine Flachriemengetriebestufe und/oder mindestens eine Keilriemengetriebestufe integriert ist/sind.

3. Pelletofen nach Anspruch 1 oder 2, **dadurch gekennzeichnet, dass** der Pelletförderer eine Förderschnecke ist.

4. Pelletofen nach Anspruch 1 oder 2, **dadurch gekennzeichnet, dass** der Pelletförderer ein Förderstern ist.

5. Pelletofen nach einem der Ansprüche 1 bis 4, **dadurch gekennzeichnet, dass** eine Antriebsscheibe (5) der mindestens einen Riemengetriebestufe (3a) mit einer vom Antriebsmotor (2) ausgehenden Antriebswelle (8) drehfest verbunden ist.

6. Pelletofen nach einem der Ansprüche 1 bis 5, **dadurch gekennzeichnet, dass** in der mindestens einen Riemengetriebestufe (3a) eine Abtriebsscheibe (7) des Riementriebs (3a) auf einer Getriebeausgangswelle (9) drehbar gelagert ist.

## Claims

1. A pellet stove comprising at least
▪ a combustion chamber,
▪ a pellet hopper and
▪ a pellet conveying device for pellet stoves in living spaces, which comprises a pellet conveyor for conveying pellets from the pellet hopper into the combustion chamber and a drive (1) for the pellet conveyor with a drive motor (2) and a gear unit (3), whereby the gear unit includes one or more gear speeds,
**characterised in that** the gear unit (3) has a gearbox housing (4) and additionally includes vibration-damping elements, whereby the gear unit (3) is at least in part surrounded by the gearbox housing (4) and, whereby the additional vibration-damping elements are arranged on a mount (16) for the drive motor (2) on the gearbox housing (4), i.e., between the drive motor (2) and the gearbox housing (4), and **in that** at least one belt drive gear is integrated into the gear unit (3) which has a first belt drive gear level (3a) connected directly to the drive motor (2) on the drive side and/or a second gear level (3b) which adjoins the first gear level (3a).

2. A pellet stove according to claim 1, **characterised in that** at least one toothed belt gear level (3a) and/or at least one flat belt gear level and/or at least one v-belt gear level is/are integrated as the belt drive level (3a).

3. A pellet stove according to claim 1 or 2, **characterised in that** the pellet conveyor is a screw conveyor.

4. A pellet stove according to claim 1 or 2, **characterised in that** the pellet conveyor is a star-wheel conveyor.

5. A pellet stove according to one of the claims 1 to 4, **characterised in that** a drive pulley (5) is non-rotatably connected to the at least one belt drive level (3a) and a drive shaft (8) extending from the drive motor (2).

6. A pellet stove according to one of the claims 1 to 5, **characterised in that** an output disc (7) on the belt drive (3a) is rotatably mounted on a gear output shaft (9) in the at least one belt drive gear level (3a).

## Revendications

1. Poêle à granulés de bois, composé d'au moins
▪ une chambre de combustion
▪ un réservoir à granulés
▪ un système d'alimentation en granulés pour poêles à granulés dans l'espace d'habitation, comprenant un chargeur pour acheminer les granulés du réservoir vers la chambre de combustion et un mécanisme d'entraînement (1) pour le chargeur de granulés, comprenant un moteur (2) et un réducteur (3), le réducteur présentant un ou plusieurs pignons,
**caractérisé en ce que** le réducteur (3) présente un carter de boîte (4) et d'autres éléments d'amortissement des vibrations, le réducteur (3) étant encerclé, au moins partiellement, par le carter de boîte (4) et les autres éléments d'amortissement des vibrations étant agencés sur une fixation (16) du moteur (2) au carter de boîte (4), c'est-à-dire entre le moteur (2) et le carter de boîte (4), et **en ce qu'**au moins un pignon à courroie est intégré dans le réducteur (3), un premier pignon (3a) étant relié directement au moteur (2) côté entraînement, et/ou un second pignon (3b) étant relié au premier pignon (3a).

2. Poêle à granulés selon la revendication 1, **caractérisé en ce qu'**au moins un pignon à courroie crantée (3a) et/ou au moins un pignon à courroie plate et/ou au moins un pignon à courroie trapézoïdale est/sont intégré(s) en tant que pignon(s) à courroie (3a).

3. Poêle à granulés selon l'une quelconque des revendications 1 ou 2, **caractérisé en ce que** le chargeur de granulés est une vis sans fin.

4. Poêle à granulés selon l'une quelconque des revendications 1 ou 2, **caractérisé en ce que** le chargeur de granulés est une étoile de convoyage.

5. Poêle à granulés selon l'une quelconque des revendications 1 à 4, **caractérisé en ce qu'**un disque conducteur (5) du pignon à courroie (3a) (un pignon minimum) est relié avec un arbre de transmission (8) partant du moteur (2), les éléments étant solidaires en rotation.

6. Poêle à granulés selon l'une quelconque des revendications 1 à 5, **caractérisé en ce que** le pignon à courroie (3a) (un pignon minimum) contient un disque conduit (7) de la courroie de distribution (3a) installé sur un arbre de sortie du réducteur, permettant la rotation.
